# EUROPÄISCHE PATENTANMELDUNG

(11) **EP 0 894 987 A2**
(43) Veröffentlichungstag der Anmeldung: **03.02.1999**
(21) Anmeldenummer: 98108484.1
(22) Anmeldetag: 09.05.1998
(51) Int. Cl.: F16B 37/12

(54) **Gewindeeinsatz**

(30) Priorität: 30.07.1997 DE 19732843
(71) Anmelder: Fairchild Fasteners Europe - Camloc GmbH, 65779 Kelkheim (DE)
(72) Erfinder: Wolf, Joachim, 60431 Frankfurt am Main (DE)
(74) Vertreter: KEIL & SCHAAFHAUSEN Patentanwälte

(57) **Zusammenfassung**

Die Erfindung bezieht sich auf einen Gewindeeinsatz (2,2') für die Verbindung von Bauteilen oder dgl., mit einem ein Außengewinde aufweisenden Schaft (6) für die Aufnahme in einer Gewindebohrung (8) Werkstücks (10) und mit einem sich an den Schaft (6) anschließenden einen mittels eines Aufweitungswerkzeugs aufweitbaren Verformungsbereich aufweisenden Kopfabschnitt (12) für die Aufnahme in einer sich an die Gewindebohrung anschließenden Vertiefung (14) in der Oberfläche des Werkstücks (10), wobei zur Verbesserung des Festsitzes der Kopfabschnitt (12) stirnseitig eine Umfangsnut (16) aufweist, deren Außenbegrenzungswand mittels des Aufweitungswerkzeugs radial aufweitbar ist.

## Beschreibung

Die Erfindung bezieht sich auf einen Gewindeeinsatz für die Verbindung von Bauteilen oder dgl., mit einem ein Außengewinde aufweisenden Schaft für die Aufnahme in einer Gewindebohrung eines z.B. plattenförmigen Werkstücks und mit einem sich an den Schaft anschließenden einen mittels eines Aufweitungswerkzeuges aufweitbaren Verformungsbereich aufweisenden Kopfabschnitt für die Aufnahme in einer sich an die Gewindebohrung anschließenden Vertiefung in der Oberfläche des Werkstücks.

Derartige z.B. aus de DE 19 70 275 U1 oder der DE 37 02 491 A1 bekannten Gewindeeinsätze bestehen bspw. aus verhältnismaßig hartem Metall, wie Stahl, und sollen nach dem Einschrauben in die bereits vorgesehene Gewindebohrung oder nach dem Einschneiden bzw. Einbringen mit Hilfe des bspw. selbstschneidenden oder selbstfurchenden Außengewindes in verhältnismäßig leicht formbare Materialen mit geringer Scherfestigkeit, wie Leichtmetall, Kunststoff oder Holz, einen einwandfreien Festsitz zur Führung oder das Einschrauben einer Paßschraube in dem sie umgebenden Material gewährleisten, um Zugkräfte aufnehmen zu können und gegen Verdrehen gesichert zu sein. Da der Festsitz durch boßes Eindrehen, Einschneiden oder Einfurchen in das umgebende verhältnismäßig weiche Material des Werkstücks durch Reibschluß, Materialverdrängung oder Materialverdichtung nicht immer ausreicht, ist vorgeschlagen worden, den Gewindeeinsatz an dem der Vorschubrichtung beim Eindrehen entgegengesetzten Ende mit einem dem Sichern gegen Verdrehen in dem verhältnismäßig leicht formbaren Material dienenden, z.B. einer Außenrändelung oder -zahnung aufweisenden, über den Innendurchmesser der Gewindebohrung aufweitbaren Verformungsbereich auszustatten. Derartige Gewindeeinsätze sind jedoch aufwendig in der Fertigung und es geht ein Teil der Innenführung bzw. des Innengewindes für die aufzunehmende Paßschraube verloren.

Aufgabe der vorliegenden Erfindung ist es, einen Gewindeeinsatz der gattungsgemäßen Art vorzuschlagen, bei welcher ein einwandfreier Festsitz mit einfachen Mitteln zuverlässig erzielbar ist.

Diese Aufgabe wird erfindungsgemäß bei einem Gewindeeinsatz der gattungsgemäßen Art dadurch gelöst, daß der Kopfabschnitt stirnseitig eine Umfangsnut aufweist, deren Außenbegrenzungswand mittels des Aufweitungswerkzeuges radial aufweitbar ist.

Hierbei kann das Aufweitungswerkzeug mit einem entsprechenden Werkzeugkopf in die Umfangsnut eingreifen und je nach dessen Ausformung unter Axialbewegung oder Drehbewegung für die Aufweitung der Außenbegrenzungswand der Umfangsnut Sorge tragen. Die Außenbegrenungswand wird auf diese Weise mit dem den Gewindeeinsatz umgebenden Material verpreßt. Die Außenbegrenzungswand weist also je nach Materialbeschaffenheit des Gewindeeinsatzes eine hinreichend geringe Materialstärke auf, um mit vertretbarem Kraftaufwand mittels des Aufweitungswerkzeugs die Aufweitung erreichen zu können, ohne daß die Innenkontur des Gewindeeinsatzes verändert werden muß.

Zur noch besseren Festlegung des Gewindeeinsatzes in dem umgebenden Material kann dabei die Außenbegrenzungswand auf ihrem Außenumfang eine Rändlung, Riffelung, Zahnung oder dgl. Oberflächenstruktur tragen, wodurch eine zusätzliche Ver ankerung des Gewindeeinsatzes in dem Werkstück erreicht wird.

Bei einer besonders vorteilhaften Ausgestaltung der Erfindung sind der Kopfabschnitt gegenüber dem Schaft und die Vertiefung gegenüber der Gewindebohrung erweitert, so daß die Aufweitung der Außenbegrenzungswand der Umfangsnut noch einfacher zu bewerkstelligen ist und eine größere Berührungsfläche zwischen Außenbegrenzungswand und dem Werkstück vorliegt.

Der Gewindeeinsatz kann bspw. eine kopfseitige Gewindebohrung für den Eingriff des Gewindeabschnitts einer ersten Schraube und/oder des Aufweitungswerkzeugs aufweisen. Dies ist insbesondere dann von Interesse, wenn mit dem Werkstück über Schrauben ein anderes Bauteil, z.B. eine Abdeckung, lösbar verbunden werden soll. Die Gewindebohrung kann dann gleichzeitig als Gegenlager für das Aufweitungswerkzeug verwendet werden, welches einen der Gewindebohrung entsprechenden Gewindeabschnitt aufweist.

Der Gewindeeinsatz kann darüber hinaus auch eine schaftseitige Gewindebohrung für den Eingriff des Gewindeabschnitts einer zweiten Schraube aufweisen für den Fall, daß an dem Werkstück schaftseitig ein anderes Bauteil, z.B. eine Abdeckung, mittels Schrauben lösbar befestigt werden soll. Selbstverständlich können die kopfseitige Gewindebohrung und die schaftseitige Gewindebohrung ineinander übergehen.

Bei einer weiteren vorteilhaften Ausgestaltung des Gewindeeinsatzes gemäß der Erfindung ist im Bereich der Rückseite des Kopfabschnitts ein Dichtmittel, wie ein Dichtring, vorgesehen und/oder die Rückseite des Kopfabschnitts selbst als radiale Dichtfläche, Dichtkante, Dichtlippe, Dichtkonus oder dgl. Dichteinrichtung ausgebildet, um beim Einbringen des Gewindeeinsatzes in eine Durchgangsöffnung des Werkstücks, welche wenigstens bereichsweise von der Gewindebohrung gebildet ist, eine zusätzliche Abdichtung zu erzielen.

Der Gewindeeinsatz hat vorzugsweise eine Länge, welche der Dicke des Werkstücks entspricht, und zwar vorzugsweise so, daß sowohl die Stirnseite des Kopfabschnitts als auch die Stirnseite des Schafts mit den Außenseite des z.B. plattenförmigen Werkstücks im wesentlichen fluchten. Auf diese Weise kann ohne Beeinträchtigung der Oberflächengestalt des Werkstücks die volle Länge der Durchgangsöffnung des Werkstücks für die Aufnahme und Festlegung des Gewindeeinsatzes genutzt werden.

Soll mit dem Werkstück kopfseitig eine Abdeckung im Abstand von der Außenseite des Werkstücks mittels eines Gewindebolzens angebracht werden, so kann der erfindungsgemäße Gewindeeinsatz mit einer Abstandshülse kombiniert werden, welche - nach dem Aufweiten - erfindungsgemäß mit einem Ringfortsatz in die stirnseitige Umfangsnut des Gewindeeinsatzes eingreift. In diesem Fall hat die Umfangsnut eine doppelte Funktion: sie dient nicht nur dem Aufweitungswerkzeug für den Eingriff zur Aufweitung der Außenbegrenzungswand sondern sie dient auch noch der Positionierung der Abstandshülse, an deren äußere Stirnfläche dann die Abdeckung im Abstand vom Werkstück anliegen kann. Mit Hilfe eines Gewindebolzens entsprechender Länge, welcher in die kopfseitige Gewindebohrung des Gewindeeinsatzes eingreifen kann, kann dann die Abdeckung an der äußeren Stirnfläche der Abstandshülse festgespannt werden.

Bei einer vorteilhaften Ausgestaltung der Montagekombination aus Gewindeeinsatz und Abstandshülse hat auch letztere einen erweiterten Kopfabschnitt, welcher sich mit seiner rückwärtigen Schulter an die Außenseite des Werkstücks oder einer an dem Werkstück festzulegenden Abdeckung anlegen kann. Dann wird mit Hilfe des einen Gewindebolzens nicht nur die äußere Abdeckung im Abstand von dem Werkstück sondern auch eine weitere Abdeckung in unmittelbarer Anlage an dem Werkstück gehalten.

Hierbei ist es möglich, die unmittelbar an dem Werkstück anliegende Abdeckung mit Hilfe der Abstandshülse vormontiert zu halten, wenn der Ringfortsatz und die Umfangsnut eine Preßpassung aufweisen, und zwar nach dem Aufweiten der Außenbegrenzungswand der Umfangsnut. Die weitere ggf. im Abstand von dem Werkstück vorgesehene Abdeckung kann dann mit Hilfe des entsprechend langen Gewindebolzens, welcher bis in die kopfseitige Gewindebohrung des Gewindeeinsatzes reicht, festgeschraubt werden.

Weiter Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung auch unabhängig von ihrer Zusammenfassung in einzelnen Ansprüchen oder deren Rückbeziehung.

Es zeigen:
- Fig. 1: einen die Erfindung aufweisenden Gewindeeinsatz, teilweise geschnitten, gemäß einer ersten Ausführungsform,
- Fig. 2a) bis c): die Montage eines erfindungsgemäßen Gewindeeinsatzes in einer Durchgangsöffnung eines plattenförmigen Werkstücks,
- Fig. 3a) bis c): die Montage ein oder mehrerer Abdeckung des plattenförmigen Werkstücks mit Hilfe eines Gewindeeinsatzes gemäß Fig. 1 und ggf. einer Abstandshülse, und
- Fig. 4: eine andere Ausführungsform eines erfindungsgemäßen Gewindeeinsatzes, teilweise geschnitten.

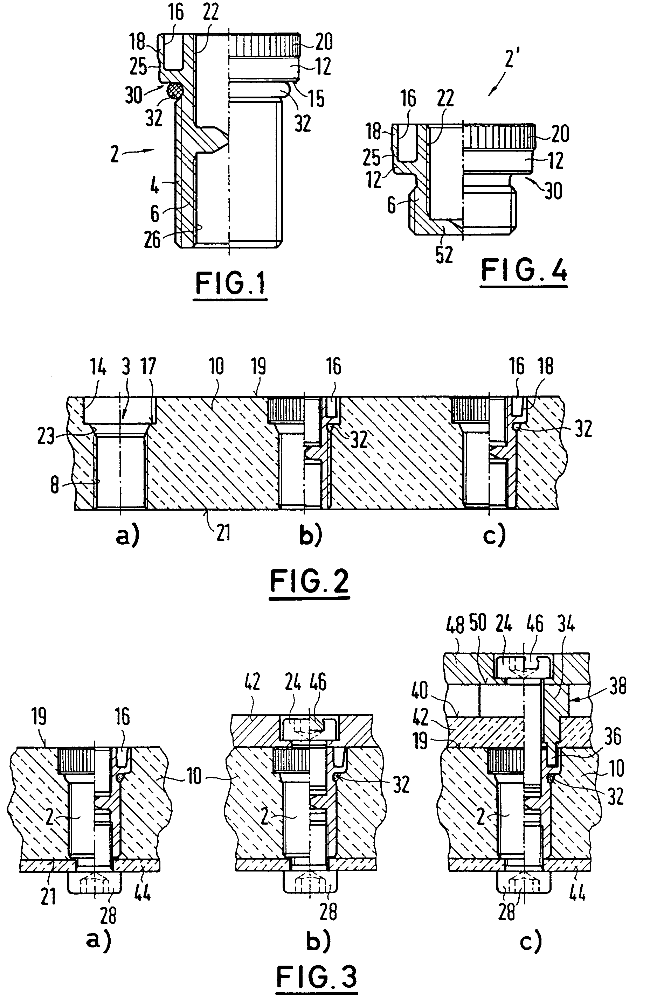

Der in Fig. 1 dargestellte Gewindeeinsatz 2 hat für die Aufnahme in einer eine Gewindebohrung 8 aufweisenden Durchgangsöffnung 3 eines z.B. plattenförmigen Werkstücks 10 einen Schaft 6 mit Außengewinde. An den Schaft 6 schließt sich an dem in der Verschubrichtung beim Eindrehen in die Gewindebohrung 8 gesehenen hinteren Ende ein erweiterter Kopfabschnitt 12 an, welcher in einer gegenüber der Gewindebohrung 8 erweiterten Vertiefung 14 in der Oberfläche des Werkstücks 10 aufgenommen werden kann.

Der Kopfabschnitt 12 kann sich beim Eindrehen des Gewindeeinsatzes 2 in die Gewindebohrung 8 mit einer Außenschulter 15 an eine Innenschulter 17 am Übergang der Vertiefung 14 zu der Gewindebohrung 8 anlegen. Bei entsprechend an die Dicke des Werkstücks 10 angepaßter Länge fluchten dann die stirnseitigen Enden des Gewindeeinsatzes 2 im wesentlichen mit den Außenseiten 19,21 des Werkstücks 10. Im Bereich der Rückseite 30 des Kopfabschnitts 12 ist als Dichtmittel 32 ein Dichtring vorgesehen, welcher sich beim Einschrauben des Gewindeeinsatzes 2 in die Gewindebohrung 8 an eine Übergangsschräge 23 zwischen Vertiefung 14 und Gewindebohrung 8 angelegt.

Der Kopfabschnitt 12 weist in seiner äußeren Stirnfläche eine Umfangsnut 16 auf, deren Außenbegrenzungswand 18 mittels eines (nicht dargestellten) Aufweitungswerkzeugs radial aufweitbar ist. Zu diesem Zweck kann die Außenbegrenzungswand 18 einen Schwächungsbereich 25 aufweisen, um die Verformbarkeit zu verbessern.

Fig. 2 veranschaulicht die verschiedenen Stufen der Einbringung und Festlegung des Gewindeeinsatzes 2 in das bzw. in dem Werkstück 10. Fig. 2a) veranschaulicht die von der Gewindebohrung 8 und der Vertiefung 14 gebildete Durchgangsöffnung 3 des plattenförmigen Werkstücks 10 vor dem Einsetzen des Gewindeeinsatzes 2. Bei Fig. 2b) ist der Gewindeeinsatz 2 bereits vollständig in die Gewindebohrung 8 eingeschraubt, bis die Außenschulter 15 des Gewindeeinsatzes 2 an die Innenschulter 17 der Durchgangsöffnung 3 angeschlagen hat. Fig. 2c) veranschaulicht den Zustand, in welchem die Außenbegrenzungswand 18 mittels eines Aufweitungswerkzeuges radial aufgeweitet worden ist, um den Gewindeeinsatz 2 zusätzlich gegen Drehkräfte und axialer Kräfte in dem Werkstück 10 zu sichern, ohne daß die kopfseitige Gewindebohrung 22 beeinträchtigt wird. Zum Zweck der Sicherung hat die Außenbegrenzungswand 18 auf ihrem Außenumfang eine Rändelung, Riffelung, Zahnung oder dgl. Oberflächenstruktur 20 für die Verankerung an der Innenumfangswand der Vertiefung 14 des Werkstücks 10.

Der Gewindeeinsatz 2 gemäß Fig. 1 hat eine kopfseitige Gewindebohrung 22 für den Eingriff des Gewindeabschnitts einer ersten Schraube 24, mit Hilfe welcher gemäß Fig. 3b) z.B. eine Abdeckung 42 an dem Werkstück 10 festgelegt werden kann. In die kopfseitige Gewindebohrung 22 kann auch das Aufweitungswerkzeug mit einem entsprechenden Gewindeabschnitt eingedreht werden, um den Aufweitevorgang für die Außenbegrenzungswand 18 der Umfangsnut 16 gleichzeitig oder anschließend auszuführen.

Der Gewindeeinsatz 2 hat ferner eine schaftseitige Gewindebohrung 26 für den Eingriff des Gewindeabschnitts einer zweiten Schraube 28, um, wie in Fig. 3a) dargestellt, an der dem Schaft 6 zugewandten Außenseite 21 des Werkstücks 10 bspw. eine Abdeckung 44 festzulegen.

Die erfindungsgemäße Umfangsnut 16 eröffnet gemäß Fig. 3c) eine weitere Montagemöglichkeit. Hierbei greift eine Abstandhülse 34 mit einem Ringfortsatz 36 in die Umfangsnut 16 des Gewindeeinsatzes 2 ein. Der Ringfortsatz 36 und die Umfangsnut 34 bilden dabei nach der Aufweitung der Umfangsnut 16 eine Preßpassung, so daß mit Hilfe eines Kopfabschnittes 38 der Abstandshülse 34 die Abdeckung 42 vormontiert an dem Werkstück 10 gehalten werden kann, an welcher der Kopfabschnitt 38 anliegt. Danach wird ein entsprechend langer Gewindebolzen 24' durch die Abstandshülse 34 hindurch in die kopfseitige Gewindebohrung 22 des Gewindeeinsatzes 2 eingedreht, um eine weitere Platte 48 im Abstand von der Abdeckung 42 an dem Werkstück 10 festzulegen. Dabei stützt sich die Platte 48 auf der äußeren Stirnfläche 50 der Abstandshülse 34 ab.

Der Gewindeeinsatz 2 gemäß Fig. 1 bis 3 hat auch eine schaftseitige Gewindebohrung 26 für eine zweite Schraube 28, mit Hilfe welcher an der schaftseitigen Außenseite des Werkstücks 10 eine weitere Abdeckung 44 an dem Werkstück 10 festgelegt werden kann.

Fig. 4 zeigt, wie die Erfindung an einem Gewindeeinsatz 2' verwirklicht ist, welcher nur mit einer kopfseitigen Gewindebohrung 22 versehen ist, welche mit einem Boden 52 des Schafts 6 endet. Die Ausbildung des Kopfabschnittes 12 ist jedoch im wesentlichen die gleiche, wie die bei der Ausführung gemäß Fig. 1. Insbesondere ist auch hier eine Umfangsnut 16 in der Stirnfläche des Gewindeeinsatzes 2' vorgesehen, welche eine verformbare Außenbegrenzungswand 18 aufweist.

### Bezugszeichenliste:

- 2,2': Gewindeeinsatz
- 3: Durchgangsöffnung des Werkstücks
- 4: Außengewinde
- 6: Schaft
- 8: Gewindebohrung des Werkstücks
- 10: Werkstück
- 12: Kopfabschnitt des Gewindeeinsatzes
- 14: Vertiefung
- 15: Außenschulter
- 16: Umfangsnut
- 17: Innenschulter
- 18: Außenbegrenzungswand
- 19: Außenseite des Werkstücks
- 20: Oberflächenstruktur, wie Rändelung
- 21: Außenseite des Werkstücks
- 22: kopfseitige Gewindebohrung des Gewindeeinsatzes
- 23: Übergangsschräge
- 24: erste Schraube
- 24': Gewindebolzen
- 25: Schwächungsbereich
- 26: schaftseitige Gewindebohrung des Gewindeeinsatzes
- 28: zweite Schraube
- 30: Rückseite des Kopfabschnitts
- 32: Dichtmittel, wie Dichtring
- 34: Abstandshülse
- 36: Ringfortsatz
- 38: Kopfabschnitt der Abstandshülse
- 40: Außenseite der Abdeckung
- 42: Abdeckung
- 44: Abdeckung
- 46: Abdeckkappe
- 48: Platte
- 50: Stirnfläche der Abstandshülse
- 52: Boden des Gewindeeinsatzes

## Patentansprüche

1. Gewindeeinsatz für die Verbindung von Bauteilen oder dgl., mit einem ein Außengewinde (4) aufweisenden Schaft (6) für die Aufnahme in einer Gewindebohrung (8) eines z.B. plattenförmigen Werkstücks (10) und mit einem sich an den Schaft (6) anschließenden einen mittels eines Aufweitungswerkzeugs aufweitbaren Verformungsbereich aufweisenden Kopfabschnitt (12) für die Aufnahme in einer sich an die Gewindebohrung (8) anschließenden Vertiefung (14) in der Oberfläche des Werkstücks (10), **dadurch gekennzeichnet**, daß der Kopfabschnitt (12) stirnseitig eine Umfangsnut (16) aufweist, deren Außenbegrenzungswand (18) mittels des Aufweitungswerkzeugs radial aufweitbar ist.

2. Gewindeeinsatz nach Anspruch 1, **dadurch gekennzeichnet**, daß die Außenbegrenzungswand (18) auf ihrem Außenumfang eine Rändelung, Riffelung, Zahnung oder dergleichen Oberflächenstruktur (20) trägt.

3. Gewindeeinsatz nach Anspruch 1 oder 2, **dadurch gekennzeichnet**, daß der Kopfabschnitt (12) gegenüber dem Schaft (6) und die Vertiefung (14) gegenüber der Gewindebohrung (8) erweitert ist.

4. Gewindeeinsatz nach einem der Ansprüche 1 bis 3, **gekennzeichnet durch** eine kopfseitige Gewindebohrung (22) für den Eingriff des Gewindeabschnitts einer ersten Schraube (24) und/oder des Aufweitungswerkzeugs.

5. Gewindeeinsatz nach einem der vorhergehenden Ansprüche **gekennzeichnet durch** eine schaftseitige Gewindebohrung (26) für den Eingriff des Gewindeabschnitts einer zweiten Schraube (28).

6. Gewindeeinsatz nach einem der vorhergehenden Ansprüche, **dadurch gekennzeichnet**, daß im Bereich der Rückseite (30) des Kopfabschnitts (12) ein Dichtmittel (32), wie ein Dichtring, vorgesehen und/oder die Rückseite (30) des Kopfabschnitts (12) selbst als radiale Dichtfläche, Dichtkante, Dichtlippe, Dichtkonus oder dgl. Dichteinrichtung ausgebildet ist.

7. Gewindeeinsatz nach einem der vorhergehenden Ansprüche, **dadurch gekennzeichnet**, daß seine Länge der Dicke des mit ihm auszustattenden Werkstücks (10) entspricht.

8. Montagekombination aus einem Gewindeeinsatz (2) nach einem der Ansprüche 1 bis 7 und einer Abstandshülse (34), **dadurch gekennzeichnet**, daß die Abstandshülse (34) mit einem Ringfortsatz (36) in die stirnseitige Umfangsnut (16) des Gewindeeinsatzes (2) eingreift.

9. Montagekombination nach Anspruch 8, **dadurch gekennzeichnet**, daß die Abstandshülse (34) einen erweiterten Kopfabschnitt (38) für die Anlage an der Außenseite (19,40) des Werkstücks (10) oder einer an dem Werkstück (10) festzulegenden Abdeckung (42) aufweist.

10. Montagekombination nach Anspruch 8 oder 9, **dadurch gekennzeichnet**, daß der Ringfortsatz (36) und die Umfangsnut (34) eine Preßpassung aufweisen.
